# EUROPÄISCHE PATENTSCHRIFT

(11) **EP 2 719 271 B1**
(45) Veröffentlichungstag und Bekanntmachung des Hinweises auf die Patenterteilung: **25.10.2017**
(21) Anmeldenummer: 13187807.6
(22) Anmeldetag: 09.10.2013
(51) Int. Cl.: A01F 12/52, A01F 12/18

(54) **NACHDRESCHEINRICHTUNG FÜR EINEN MÄHDRESCHER**
AFTER-THRESHING DEVICE FOR A COMBINE HARVESTER
DISPOSITIF DE BATTAGE SUPPLÉMENTAIRE POUR UNE MOISSONNEUSE-BATTEUSE

(30) Priorität: 15.10.2012 DE 102012218742
(43) Veröffentlichungstag der Anmeldung: 16.04.2014
(73) Patentinhaber: Deere & Company, Moline, IL 61265 (US)
(72) Erfinder: Wilde von Wildemann, Philipp, 66459 Kirkel ot Limbach (DE)
(74) Vertreter: Holst, Sönke

(56) Entgegenhaltungen:
- EP-A1- 2 064 940
- DE-A1- 2 606 588
- GB-A- 919 327
- US-A- 4 310 004

## Beschreibung

Die Erfindung betrifft eine Nachdrescheinrichtung für einen Mähdrescher, umfassend:
einen stromab einer Überkehrschnecke anordneten Überkehrförderer, mit dem die Überkehr aus einer Reinigungseinrichtung nach oben förderbar ist und der einen Auslass zur Abgabe der Überkehr aufweist, und
einen innerhalb eines Gehäuses angeordneten Nachdrescher mit einer vertikalen Drehachse, der in axialer Richtung von oben her mit der Überkehr aus dem Auslass des Überkehrförderers beaufschlagbar ist und eine radial angeordnete Abgabeöffnung aufweist, durch die die nachgedroschene Überkehr einem Förderer zum Transport der nachgedroschenen Überkehr zur Reinigungseinrichtung zuführbar ist.

### Stand der Technik

Bei Mähdreschern wird das im Dresch- und Trennvorgang gewonnene Korn in einer Reinigungseinrichtung gereinigt, bevor es in einem Korntank abgelegt wird. Die Reinigungseinrichtung umfasst üblicherweise ein Obersieb und ein Untersieb, die in eine Schwingbewegung versetzt und mit einem Luftstrom beaufschlagt werden, um leichtere Verunreinigungen, wie Kaff und kleinere Strohbestandteile fortzublasen, während das Korn durch Öffnungen in den Siebe hindurch fällt und schließlich durch Förderer in den Korntank gelangt. Dabei verbleibt am rückwärtigen Ende des Untersiebs noch ein als Überkehr bezeichnetes Gemisch aus Verunreinigungen und nicht ausgedroschenen Ähren, das entweder ein zweites Mal dem Dreschprozess unterzogen oder (bei einer anderen Ausführungsform von Mähdreschern) in einem separaten Nachdrescher ausgedroschen wird, bevor es wieder der Reinigungseinrichtung zugeführt wird.

Ein derartiger Nachdrescher ist in der DE 26 06 588 A1 beschrieben. Die Überkehrschnecke führt die Überkehr einem Paddelelevator zu, der sie schräg nach vorn und oben fördert und durch eine Auswurföffnung nach unten durch ein oberes, halbkreisförmiges Gehäuseteil auf den eigentlichen Nachdrescher fallen lässt, der aus einer um die Hochachse rotierenden, in einem zylindrischen Gehäuseteil angeordneten Scheibe mit radial darauf befestigten, flügelartigen Mitnehmern besteht, an deren Oberseiten entgegen der Drehrichtung nach hinten abgewinkelte Dreschstifte befestigt sind. Die Dreschstifte laufen zwischen stationären Stiften hindurch, die an einem abnehmbaren Stiftträger befestigt sind. In der Mitte der Scheibe ist ein kegelförmiges Leitelement befestigt, dessen Höhe etwa jener der flügelartigen Mitnehmer entspricht. Die im Nachdrescher bearbeitete Überkehr wird durch eine radiale Auswurföffnung auf einen Stufenboden ausgeworfen, der sie wieder der Reinigungseinrichtung zuführt. Die Überkehr wird am oberen Ende des oberschlächtig arbeitenden Paddelelevators nach unten abgegeben und gelangt allein durch die Schwerkraft durch das obere Gehäuseteil. Als nachteilig ist hier anzusehen, dass sich - mangels einer aktiven Förderung der Überkehr zwischen dem Paddelelevator und dem Nachdrescher- Bestandteile der Überkehr im oberen Gehäuseteil ansammeln können, insbesondere bei feuchterem Erntegut, und schließlich den Nachdrescher verstopfen.

Die US 6 975 384 B2 beschreibt einen anderen Nachdrescher, bei dem ein koaxial zur Überkehrschnecke angeordnetes Flügelrad die Überkehr nach oben zu einem zweiten Flügelrad fördert, das es wiederum in das Gehäuse eines Nachdreschers mit radial zu einer um etwa 45° nach außen geneigten Drehachse angeordneten Flügeln fördert. Hier dienen die Flügelräder bereits zum Ausdreschen der Überkehr.

In der GB 919 327 A ist ein Mähdrescher mit einem als Paddelförderer ausgeführten Überkehrförderer beschrieben, stromab dem ein Flügelrad die Überkehr über die Breite der Drescheinrichtung verteilt.

Schließlich zeigt die US 4 310 004 A einen Nachdrescher, bei dem die Überkehrschnecke, ein Flügelrad zur Förderung der Überkehr und ein Nachdrescher mit radial verlaufenden Armen koaxial auf einer gemeinsamen Achse angeordnet sind.

### Aufgabe der Erfindung

Die der Erfindung zu Grunde liegende Aufgabe wird darin gesehen, eine verbesserte Nachdrescheinrichtung mit einem Überkehrförderer und einem unterhalb einer Abgabeöffnung des Überkehrförderers angeordneten Nachdrescher bereitzustellen, bei dem die Wahrscheinlichkeit von Verstopfungsproblemen gegenüber dem Stand der Technik vermindert ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

### Lösung

Eine Nachdrescheinrichtung für einen Mähdrescher umfasst einen stromab einer Überkehrschnecke anordneten Überkehrförderer, mit dem die Überkehr aus einer Reinigungseinrichtung nach oben förderbar ist und der einen Auslass zur Abgabe der Überkehr aufweist. Außerdem umfasst die Nachdrescheinrichtung einen innerhalb eines Gehäuses angeordneten Nachdrescher mit einer vertikalen Drehachse, der in axialer Richtung von oben her mit der Überkehr aus dem Auslass des Überkehrförderers beaufschlagbar ist und eine radial angeordnete Abgabeöffnung aufweist, durch die die nachgedroschene Überkehr einem Förderer zum Transport der nachgedroschenen Überkehr zu einer Reinigungseinrichtung zuführbar ist. Es wäre auch denkbar, dass die Abgabeöffnung die nachgedroschene Überkehr direkt der Reinigungseinrichtung, beispielsweise einem Vor- oder Obersieb, zuführt. Zwischen dem Auslass des Überkehrförderers und dem Nachdrescher ist ein Flügelrad mit einer horizontalen Drehachse zur aktiven Förderung der Überkehr angeordnet.

Auf diese Weise vermeidet man die im Stand der Technik (DE 26 06 588 A1) beobachteten Staus der Überkehr zwischen dem Überkehrförderer und dem Nachdrescher.

Das Flügelrad ist innerhalb eines im Wesentlichen zylindrischen, der Hüllkurve des Flügelrads angepassten Gehäuses angeordnet. Das Gehäuse ist mit einem in einer vertikalen Ebene orientierten Einlass, der dem Auslass des Überkehrförderers unmittelbar benachbart ist, und einem unteren, in einer horizontalen Ebene angeordneten Auslass, dem eine obere Öffnung im Gehäuse des Nachdreschers unmittelbar benachbart ist, versehen.

Der Überkehrförderer ist vorzugsweise ein Paddelelevator und die Ebene des Auslasses etwa vertikal orientiert. Es kann jedoch auch ein Schneckenförderer oder ein beliebiger anderer Förderer als Überkehrförderer verwendet werden, und die Ebene des Auslasses könnte auch schräg, z.B. unter 45° zur Vertikalen, oder horizontal orientiert sein.

Das Flügelrad umfasst vorzugsweise ein inneres, starres Element mit daran außen befestigten, sich radial erstreckenden Flügeln aus flexiblem Material.

Die Drehachse des Flügelrads und die Drehachsen von Umlenkrädern einer Kette des Paddelförderers verlaufen vorzugsweise parallel zueinander und insbesondere quer zur Vorwärtsrichtung des Mähdreschers. Das Flügelrad kann dann vom oberen Umlenkrad des Paddelförderers angetrieben werden.

Der Nachdrescher kann eine um die Hochachse rotierende, in dem zylindrischen Gehäuse angeordnete Scheibe mit radial darauf befestigten, flügelartigen Mitnehmern aufweisen, an deren Oberseiten gerade oder vorzugsweise entgegen der Drehrichtung nach hinten abgewinkelte Dreschstifte befestigt sind. Hierzu und bezüglich weiterer, bevorzugter Merkmale des Nachdreschers an sich wird auf die Offenbarung der DE 26 06 588 A1 verwiesen, die durch Verweis in die vorliegenden Unterlagen aufgenommen wird.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers,
- Fig. 2: eine perspektivische, seitliche Ansicht einer Nachdrescheinrichtung, und
- Fig. 3: eine Draufsicht auf den Nachdrescher der Nachdrescheinrichtung.

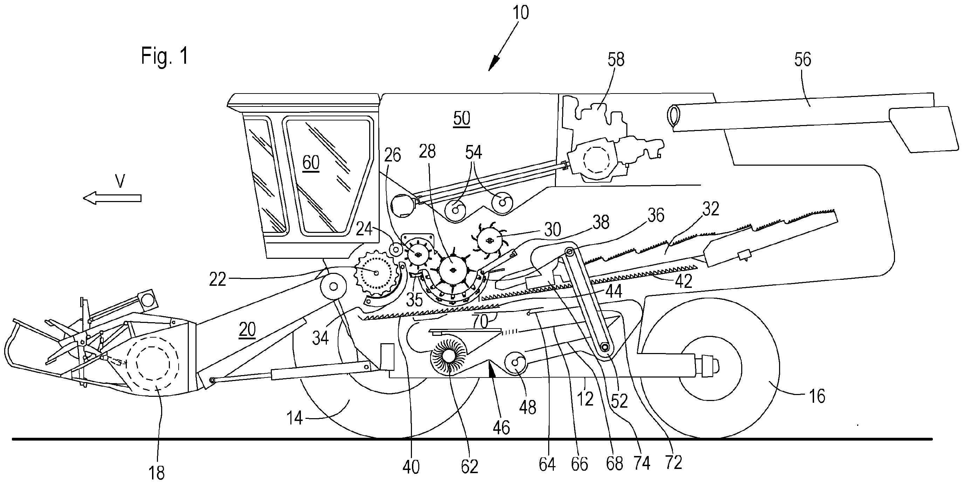

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Unterhalb des Mehrtrommeldreschwerks befindet sich ein vorderer Förderboden 40, der im Betrieb in eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Korn und Spreu nach hinten, während der hintere Förderboden 42 das durch den Strohschüttler 32 hindurch strömende Gemisch aus Korn und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann auf ein Vorsieb 70 einer und vom Vorsieb 70 auf ein Obersieb 64 einer Reinigungseinrichtung 46.

Die Reinigungseinrichtung 46 umfasst in an sich bekannter Weise ein Gebläse 62, das das Obersieb 64 und ein Untersieb 66 von unten her mit einem Luftstrom beaufschlagt. Durch das Untersieb 66 nach unten hindurch fallendes Korn wird durch einen Förderboden 68 einer Körnerschnecke 48 zugeführt, die es einem nicht gezeigten Elevator zugeführt, der es in einen Korntank 50 befördert. Eine Überkehrschnecke 52 führt die im Wesentlichen aus unausgedroschene Ährenteilen bestehende Überkehr, die am hinteren Ende des Untersiebs 66 nach unten fällt, zusammen und gibt sie einem Überkehrelevator 72 auf, der sie einem Nachdrescher 74 zuführt.

Die am rückwärtigen Ende des Obersiebs 64 abgegebene Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden. Einzelheiten der Reinigungseinrichtung 46 können der DE 10 2005 266 608 A1 entnommen werden, deren Offenbarung durch Verweis mit in die vorliegenden Unterlagen aufgenommen wird.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden. Es ist aber auch denkbar, einen rotierenden Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

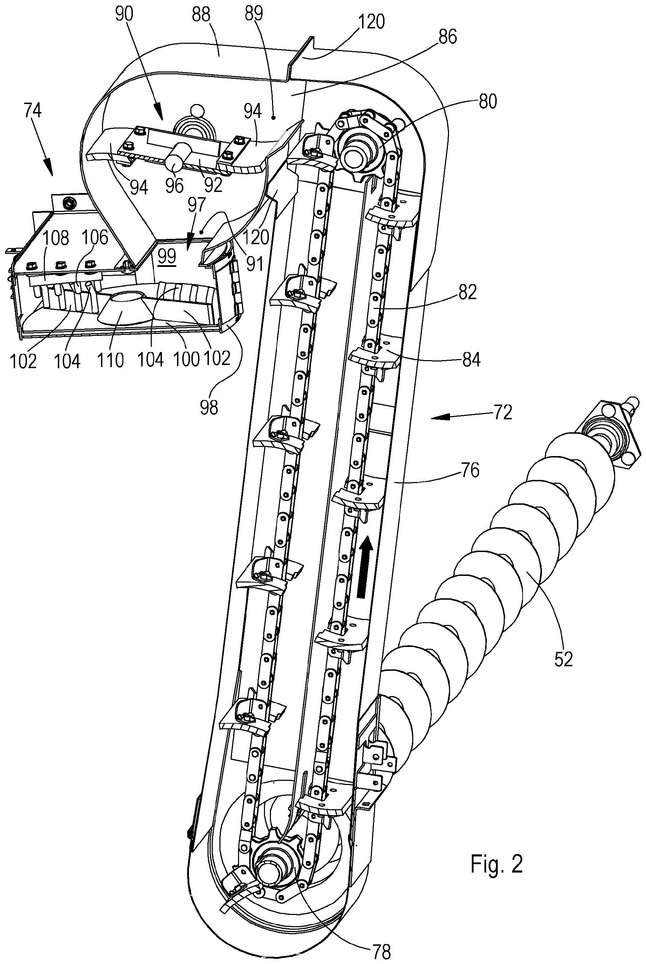

Die Figur 2 zeigt eine perspektivische seitliche Ansicht des Überkehrelevators 72 und des Nachdreschers 74, deren seitlichen Abdeckungen zur Veranschaulichung entfernt wurden. Der Überkehrelevator 72 umfasst ein sich von der Überkehrschnecke 52 nach oben erstreckendes Gehäuse 76, in dem ein aus einer - um untere und obere Umlenkräder 78, 80, die sich horizontal und quer zur Vorwärtsrichtung V erstreckende Drehachsen haben, umlaufenden - Kette 82 mit daran befestigten Paddeln 84 aufgebauter Paddelelevator angeordnet ist. Das untere Umlenkrad 78 ist starr mit der Überkehrschnecke 52 verbunden und wird durch diese angetrieben. Der Paddelelevator gibt die Überkehr durch einen in einer vertikalen Ebene liegenden Auslass 86 in horizontaler Richtung nach vorn ab.

An das Gehäuse 76 des Überkehrelevators 76 schließt sich unmittelbar ein Gehäuse 88 mit einem darin angeordneten Flügelrad 90 an. Die Einlassöffnung des Gehäuses 88 fällt mit dem Auslass 86 zusammen und das Gehäuse 88 ist ober- und unterhalb des Auslasses 86 und an dessen beiden Seiten mit dem Gehäuse 76 des Überkehrförderers 76 durch Flansche 120 verbunden. Das Gehäuse 88 ist im Wesentlichen zylindrisch und - abgesehen von einem in der Einlassöffnung mündenden, trichterförmigen Befüllschacht 89 und einem in einem unteren Auslass 97 mündenden, trichterförmigen Auswurfschacht 91 - an den Hüllkreis des Flügelrads 90 angepasst. Das Flügelrad 90 umfasst ein radial zu einer Welle 96 orientiertes, inneres, starres Element 92 mit daran außen befestigten, sich diametral gegenüber liegenden und radial erstreckenden Flügeln 94 aus flexiblem Material (z.B. Gummi). Das Element 92 wird durch die mittige, sich horizontal und quer zur Vorwärtsrichtung V erstreckende Welle 96 in Drehung versetzt, wobei sich der dem Auslass 86 benachbarte Flügel 94 jeweils nach oben dreht. Dadurch wird der den Schacht des Überkehrelevators 76 verlassende Materialstrom entlang der äußeren (sichelförmigen) Wand des Gehäuses 88 geleitet und es besteht nicht die Gefahr, dass das Flügelrad 90 Material in den Überkehrelevator 76 zurück wirft.

Unterhalb des Gehäuses 88 des Flügelrads 90 ist der Nachdrescher 74 angeordnet. Der Nachdrescher 74 ist innerhalb eines zylindrischen Gehäuses 98 mit vertikaler Mittelachse und unteren und oberen Deckplatten angeordnet. Die obere Deckplatte des Gehäuses 98 des Nachdreschers 72 ist mit einer rechteckigen Öffnung 99 ausgestattet, die sich unmittelbar und deckungsgleich an den unteren Auslass 97 des trichterförmigen Auswurfschachts 91 des Gehäuses 88 des Flügelrads 90 anschließt. Der Nachdrescher 74 umfasst eine um die mittige Hochachse in Drehung versetzbare, in dem zylindrischen Gehäuse 98 angeordnete Scheibe 100 mit radial darauf befestigten, flügelartigen Mitnehmern 102, an deren Oberseiten entgegen der Drehrichtung nach hinten abgewinkelte Dreschstifte 104 befestigt sind. Die Dreschstifte 104 wirken mit ortsfesten Stiften 106 zusammen, die an Halterungen 108 befestigt sind, welche ihrerseits abnehmbar an der oberen Deckplatte des Gehäuses 98 angebracht sind. Zwischen den Mitnehmern 102 ist auf der Scheibe 100 mittig ein Kegelstumpf 110 befestigt.

Der Antrieb des Nachdreschers 74 kann in an sich bekannter Weise (DE 26 06 588 A1) über ein Kegelradgetriebe erfolgen, dessen den Nachdrescher 74 mit relativ hoher Drehzahl antreibender Abtrieb auch zum Antrieb weiterer Elemente, wie einer Hydraulikpumpe, dienen kann. Das Flügelrad 90 kann über eine nicht gezeigte Antriebsverbindung, die z.B. eine Kette und zwei Ritzel oder einen Riemen und zwei Riemenscheiben umfassen kann, vom oberen Umlenkrad 80 des Überkehrelevators 76 her angetrieben werden.

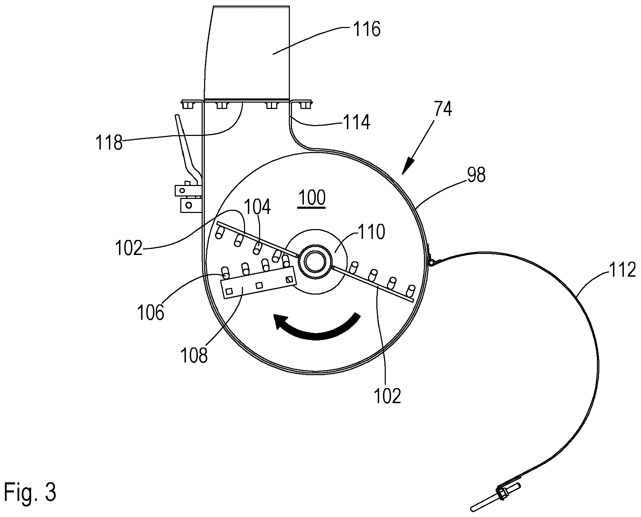

Anhand der Figur 3, die eine Draufsicht auf den Nachdrescher 74 zeigt, ist erkennbar, dass die seitliche Wand 112 des Gehäuses 98 des Nachdreschers 74 zu Wartungsarbeiten zur Seite hin aufschwenkbar ist. Außerdem erkennt man, dass eine gedachte, die ortsfesten Stifte 106 jeder Halterung 108 verbindende Gerade nicht genau radial orientiert ist, sondern einen vor- oder nachlaufenden Winkel mit dem Radius der Scheibe 100 einschließt, damit die Überkehr nicht gleichzeitig durch alle Stifte 106 und Dreschstifte 104 bearbeitet wird, sondern jeweils zeitversetzt. Die Figur 3 zeigt außerdem einen radialen Auslassschacht 114 des Nachdreschers 74 mit einer in einer vertikalen Ebene liegenden Abgabeöffnung 118, an welche sich ein oberes, nach unten hin abgewinkeltes Leitblech 116 anschließt, durch welche die nachgedroschene Überkehr in seitlicher Richtung auf den hinteren Förderboden 42 ausgeworfen wird, der sie wieder der Reinigungseinrichtung 46 zuführt. Durch das Leitblech 116 erreicht man eine näherungsweise homogene Verteilung der ausgedroschenen Überkehr über die Breite des Förderbodens 42. Es wäre auch denkbar, nach unten hängende Tücher (nicht gezeigt) unterhalb der Schüttler 32 anzubringen, die die vom Nachdrescher 74 abgegebene Überkehr gleichmäßiger auf dem Förderboden 42 verteilen. Die von den Schüttlern 32 nach unten in den Auswurfstrahl des Nachdreschers ragenden Tücher tauchen durch die Schüttlerbewegung abwechselnd in den Gutstrahl ein. Dadurch wird dieser, je nachdem welcher Schüttler sich gerade in der unteren Stellung befindet, mal früher und mal später abgelenkt. Es wäre alternativ oder zusätzlich möglich, das Leitblech 116 durch den an der linken Maschinenseite befindlichen Schüttler 32 in eine Auf- und Abbewegung zu versetzen (vergleichbar mit der Auswurfklappe am Ende eines Auswurfkrümmers eines Feldhäckslers), um die Gutverteilung auf dem Förderboden 42 möglichst gut zu vergleichmäßigen.

Nach alledem erreicht man folgende Funktionsweise der Nachdrescheinrichtung, die sich aus dem Überkehrförderer 72, dem Flügelrad 90 mit dem zugehörigen Gehäuse 88 und dem Nachdrescher 74 zusammensetzt. Der Überkehrförderer 72 fördert die von der Überkehrschnecke 52 zusammengeförderte Überkehr nach oben und wirft sie durch den Auslass 86 in horizontaler Richtung ab. Das Flügelrad 90 fördert die Überkehr dann oberschlächtig und nach unten durch den Auslass 97 in den Nachdrescher 72, der die ausgedroschene Überkehr über den Auswurfschacht 114 auf den hinteren Förderboden 42 auswirft, wobei sie durch das Leitblech 116 nach unten hin abgelenkt wird. Das Flügelrad 90 bewirkt einen kontinuierlichen Transport der Überkehr vom Überkehrförderer 72 in den Nachdrescher 74 und vermeidet in diesem Übergangsbereich Staus und Verstopfungen.

## Patentansprüche

1. Nachdrescheinrichtung für einen Mähdrescher (10), umfassend:
einen stromab einer Überkehrschnecke (52) anordneten Überkehrförderer (72), mit dem die Überkehr aus einer Reinigungseinrichtung (46) nach oben förderbar ist und der einen Auslass (86) zur Abgabe der Überkehr aufweist, und
einen innerhalb eines Gehäuses (98) angeordneten Nachdrescher (74) mit einer vertikalen Drehachse, der in axialer Richtung von oben her mit der Überkehr aus dem Auslass (86) des Überkehrförderers (72) beaufschlagbar ist und eine radial angeordnete Abgabeöffnung (118) aufweist, durch die die nachgedroschene Überkehr einem Förderer (42) zum Transport der nachgedroschenen Überkehr zur Reinigungseinrichtung (46) zuführbar ist,
**dadurch gekennzeichnet, dass** zur aktiven Förderung der Überkehr zwischen dem Auslass (86) des Überkehrförderers (72) und dem Nachdrescher (74) ein Flügelrad (90) mit einer horizontalen Drehachse angeordnet ist, wobei das Flügelrad (90) innerhalb eines im Wesentlichen zylindrischen, der Hüllkurve des Flügelrads (90) angepassten Gehäuses mit einem vertikalen Einlass, der dem Auslass (86) des Überkehrförderers (72) unmittelbar benachbart ist, und einem unteren, horizontalen Auslass (97), dem eine obere Öffnung (99) im Gehäuse (98) des Nachdreschers (74) unmittelbar benachbart ist, angeordnet ist.

2. Nachdrescheinrichtung nach Anspruch 1, wobei der Überkehrförderer (72) ein Paddelelevator ist und der Auslass (86) sich in einer etwa vertikal orientierten Ebene befindet.

3. Nachdrescheinrichtung nach einem der vorhergehenden Ansprüche, wobei das Flügelrad (90) ein inneres, starres Element (92) mit daran außen befestigten, sich radial erstreckenden Flügeln (94) aus flexiblem Material umfasst.

4. Nachdrescheinrichtung nach einem der Ansprüche 2 oder 3, wobei die Drehachse des Flügelrads (90) und die Drehachsen von Umlenkrädern (78, 80) einer Kette (82) des Paddelförderers parallel verlaufen.

5. Nachdrescheinrichtung nach Anspruch 4, wobei das Flügelrad (90) vom oberen Umlenkrad (80) des Paddelförderers (72) angetrieben wird.

6. Nachdrescheinrichtung nach einem der Ansprüche 1 bis 5, wobei das Flügelrad (90) oberschlächtig fördert.

7. Nachdrescheinrichtung nach einem der vorhergehenden Ansprüchen, wobei der Nachdrescher (74) eine um die Hochachse rotierende, in dem zylindrischen Gehäuse (98) angeordnete Scheibe (100) mit radial darauf befestigten, flügelartigen Mitnehmern (102) aufweist, an deren Oberseiten entgegen der Drehrichtung nach hinten abgewinkelte Dreschstifte (104) befestigt sind.

8. Reinigungseinrichtung (46) mit einem Gebläse (62), zwei übereinander angeordneten Sieben (64, 66) und einer Nachdrescheinrichtung nach einem der Ansprüche 1 bis 7.

9. Mähdrescher (10) mit einer Reinigungseinrichtung (46) nach Anspruch 8.

## Claims

1. After-threshing device for a combine harvester (10), comprising:
a returns conveyer (72) which is arranged downstream of a returns worm (52) and with which the returns from a cleaning device (46) can be conveyed upwards and which has an outlet (86) for discharging the returns, and
an after-thresher (74) with a vertical axis of rotation, which is arranged within a housing (98) and can be charged from above in the axial direction with the returns from the outlet (86) of the returns conveyer (72) and has a radially arranged discharge opening (118) through which the after-threshed returns can be supplied to a conveyer (42) for transporting the after-threshed returns to the cleaning device (46),
**characterized in that** an impeller (90) with a horizontal axis of rotation is arranged for the active conveying of the returns between the outlet (86) of the returns conveyer (72) and the after-thresher (74), wherein the impeller (90) is arranged within a substantially cylindrical housing which is matched to the envelope of the impeller (90) and has a vertical inlet, which is directly adjacent to the outlet (86) of the returns conveyer (72), and a lower horizontal outlet (97), to which an upper opening (99) in the housing (98) of the after-thresher (74) is directly adjacent.

2. After-threshing device according to Claim 1, wherein the returns conveyer (72) is a paddle elevator, and the outlet (86) is located in an approximately vertically oriented plane.

3. After-threshing device according to either of the preceding claims, wherein the impeller (90) comprises an inner rigid element (92) with radially extending blades (94) made of flexible material fastened to said element on the outside.

4. After-threshing device according to either of Claims 2 and 3, wherein the axis of rotation of the impeller (90) and the axes of rotation of deflecting wheels (78, 80) of a chain (82) of the paddle conveyer run in parallel.

5. After-threshing device according to Claim 4, wherein the impeller (90) is driven by the upper deflecting wheel (80) of the paddle conveyer (72).

6. After-threshing device according to one of Claims 1 to 5, wherein the impeller (90) conveys in an overshot manner.

7. After-threshing device according to one of the preceding claims, wherein the after-thresher (74) has a disc (100) which rotates about the vertical axis, is arranged in the cylindrical housing (98), has blade-like drivers (102) fastened radially thereto and to the upper sides of which threshing pins (104) which are angled rearwards counter to the direction of rotation are fastened.

8. Cleaning device (46) with a fan (62), two strainers (64, 66) arranged one above the other and an after-threshing device according to one of Claims 1 to 7.

9. Combine harvester (10) with a cleaning device (46) according to Claim 8.

## Revendications

1. Dispositif de batteur à otons pour une moissonneuse-batteuse (10), comprenant :
un transporteur d'otons (72) disposé en aval d'une vis à otons (52), avec lequel les otons peuvent être transportés vers le haut depuis un dispositif de nettoyage (46) et qui présente une sortie (86) pour décharger les otons, et
un batteur à otons (74) disposé à l'intérieur d'un boîtier (98), avec un axe de rotation vertical, qui peut être sollicité dans la direction axiale depuis le haut avec les otons provenant de la sortie (86) du transporteur d'otons (72) et qui présente une ouverture de déchargement disposée radialement (118), à travers laquelle les otons battus peuvent être acheminés à un transporteur (42) pour le transport des otons battus jusqu'à un dispositif de nettoyage (46),
**caractérisé en ce que** pour le transport actif des otons entre la sortie (86) du transporteur d'otons (72) et le batteur à otons (74) est disposée une roue à ailettes (90) avec un axe de rotation horizontal, la roue à ailettes (90) étant disposée à l'intérieur d'un boîtier essentiellement cylindrique, adapté à la courbe d'enveloppe de la roue à ailettes (90), avec une entrée verticale, qui est immédiatement adjacente à la sortie (86) du transporteur d'otons (72) et une sortie inférieure horizontale (97) qui est immédiatement adjacente à une ouverture supérieure (99) dans le boîtier (98) du batteur à otons (74).

2. Dispositif de batteur à otons selon la revendication 1, dans lequel le transporteur d'otons (72) est un élévateur à palettes et la sortie (86) se trouve dans un plan orienté approximativement verticalement.

3. Dispositif de batteur à otons selon l'une quelconque des revendications précédentes, dans lequel la roue à ailettes (90) comprend un élément interne rigide (92) à l'extérieur duquel sont fixées des ailettes (94) en matériau flexible s'étendant radialement.

4. Dispositif de batteur à otons selon l'une quelconque des revendications 2 ou 3, dans lequel l'axe de rotation de la roue à ailettes (90) et les axes de rotation de roues de déflection (78, 80) d'une chaîne (82) du transporteur à palettes s'étendent parallèlement.

5. Dispositif de batteur à otons selon la revendication 4, dans lequel la roue à ailettes (90) est entraînée par la roue de déflection supérieure (80) du transporteur à palettes (72).

6. Dispositif de batteur à otons selon l'une quelconque des revendications 1 à 5, dans lequel la roue à ailettes (90) refoule par le dessus.

7. Dispositif de batteur à otons selon l'une quelconque des revendications précédentes, dans lequel le batteur à otons (74) présente un disque (100) tournant autour de l'axe vertical, disposé dans le boîtier cylindrique (98) avec des éléments d'entraînement de type ailettes (102) fixés radialement sur celui-ci, sur les côtés supérieurs duquel sont fixées des broches de battage (104) coudées vers l'arrière dans le sens opposé au sens de rotation.

8. Dispositif de nettoyage (46) comprenant une soufflante (62), deux cribles (64, 66) disposés l'un au-dessus de l'autre et un dispositif de batteur à otons selon l'une quelconque des revendications 1 à 7.

9. Moissonneuse-batteuse (10) comprenant un dispositif de nettoyage (46) selon la revendication 8.
